# EUROPEAN PATENT SPECIFICATION

(11) **EP 1 061 282 B1**
(45) Date of publication and mention of the grant of the patent: **26.10.2005**
(21) Application number: 99830380.4
(22) Date of filing: 18.06.1999
(51) Int. Cl.: F16D 65/12

(54) **A hub for a disc brake**
Nabe für eine Scheibenbremse
Moyeu pour frein à disque

(43) Date of publication of application: 20.12.2000
(73) Proprietor: RIGANTI S.p.A., I-21048 Solbiate Arno (VA) (IT)
(72) Inventor: Borghetti, Fernando c/o RIGANTI S.p.A., 21048 Solbiate Arno (VA) (IT); Granata, Teodoro c/o RIGANTI S.p.A., 21048 Solbiate Arno (VA) (IT)
(74) Representative: Ferraiolo, Ruggero

(56) References cited:
- DE-A- 2 806 028
- DE-B- 1 179 239
- FR-A- 2 452 638
- US-A- 2 959 253
- US-A- 3 430 741

## Description

This present invention concerns a hub for a disc brake, particularly a hub for a rail vehicle disc brake.

It is known that a disc brake comprises generally a hub wherein the axle of the vehicle bugie is cold forced in order to prevent hub sliding on the axle during braking. Two opposite friction rings are secured to the hub by means of angularly spaced bolts, each passing through a hole in the hub flange. In general, the axle diameter exceeds the inner hub diameter by 0.2- 0.3 millimeters and such a negative allowance, or another proper one, makes integral the hub and the axle as required under braking condition.

Document FR-A- 2452638 designed for the cyclic braking work is know wherein an elastic means 14 arranged between the hub and the friction rings is disclosed that compensates the thermal expansion of the rings on the cyclic braking work. Connecting the elastic means with the rings entails the use of an intermediate flange and bolting, which represents a complication in the mounting the device and a weak functional point Moreover, the elastic means works as a flection spring which responds according to an arc portion and not in a radial direction as desirable. Document US - A - 3430741 also designed for the cyclic braking work is known wherein the connection means between the hub and rings might appear relevant with respect to the parallel connection means in the application, the latter being more adapted to minimize the shear stress in the connection bolts. Then, a sloping hub section 31 connects the hub with bosses in turn connected with the rings, such sloping section, anyway, having not the function of an elastic means.

The drawback of the prior art is that a radial expansion of the hub flange and consequently an undesired permanent stress in said bolts or even their bending are caused by a cold forcing operation.

The disc brake hub according to this present invention obviates the above drawback thanks to an annular elastic portion in the hub flange itself which saves the effect due to said cold forcing operation. Such an annular elastic portion comprises at least one loop in that region of the flange which is substantially straight and flat in the conventional hubs, said region being comprised between the hub core and the circle along which said bolts are set.

The advantage of the invention lies in that this loop works as a spring interposed between said core and said bolts. The loop takes up the flange expansion saving bolt stressing and bending on said forcing operation as well as sensitive transversal actions in the parts where the two friction rings are connected with the flange. At the same time, the loop being integral with the hub assures that the braking action exerted by the pads on the friction rings is transmitted totally and rigidly to the bugie axle.

The more convenient loop shape and thickness are chosen depending on the disc features of the disc brake wherein this invention is applied.

The invention is described by way of example with reference to the accompanying drawings in which
Fig. 1 is a part cross-sectional view and
Fig. 2 is a part view according to arrow B in Fig. 1.

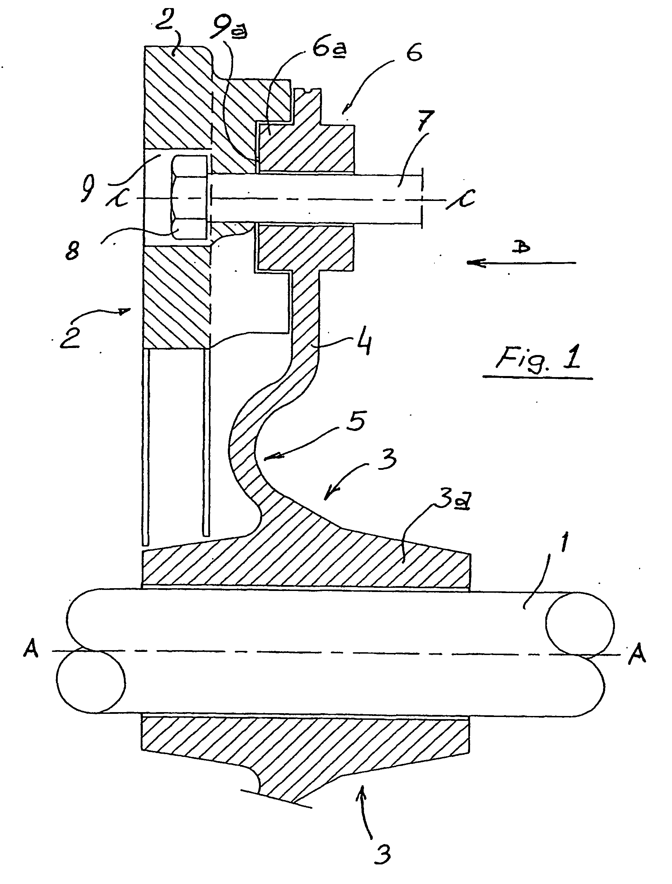

Fig. 1 shows only that half portion of a disc which is above axle 1 of a rail vehicle bugie and, to make more clear the figure, shows only the left friction ring 2 secured to the hub 3 in the core 3a of which axle 1 appears forced. Hub flange 4 comprises an annular region in the shape of a loop 5. The flange peripheral region bears six identical angularly spaced connection means 6 that, with their opposite shoulders 6a received into respective recesses 9a in the inner ring side, secure the two opposite friction rings to the hub 3, the left friction ring 2 is shown in the figure and the right one is not shown. Conventionally, each connection means 6 comprises a bolt 7 passing through the flange 4, a bolt head 8 and a not shown nut that are received into respective suitable recesses 9 in the friction rings. A-A is the axis of rotation of axle 1 and C-C is the axis of bolt 7.

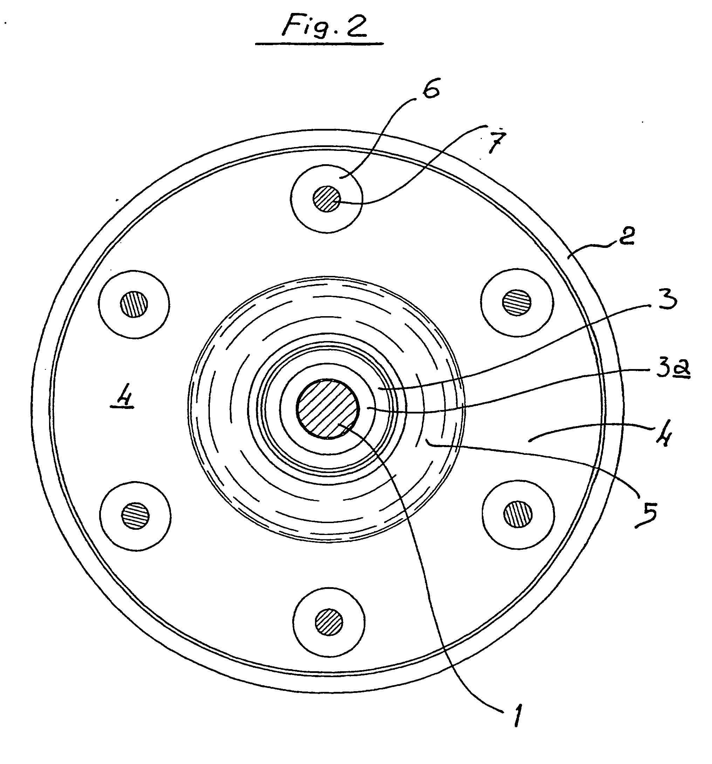

Fig. 2 points out that the loop 5 is 360° extended in the region of the flange 4 comprised between hub core 3a and the six connection means 6. By the reference numbers 1, 2, 3, 6 and 7 parts described in Fig. 1 are referred to.

## Claims

1. A hub (3) for a disc brake wherein the axle (1) of a vehicle bugie may be forced into the hub core (3a) that radially extends as a circular flange (4) comprising an elastic circular portion (5) and holding two opposite friction rings (2) by connection means (6) comprising through bolts (7) that press the friction rings on respective flange walls **characterized in that** the elastic circular portion is in the shape of at least one loop (5) working as a compression spring interposed between the hub and the connection means (6), the latter comprising opposite shoulders (6a) received into respective recesses (9a) in the inner ring sides.

## Patentansprüche

1. Nabe (3) für eine Scheibenbremse, wobei die Welle (1) eines Fahrzeugfahrgestells in den Nabenkern (3a) eingezwängt werden kann, der sich radial als ein kreisförmiger Flansch (4) erstreckt, der einen elastischen kreisförmigen Bereich (5) aufweist und zwei einander gegenüberliegende Reibringe (2) durch Verbindungsmittel (6) hält, die durchgehende Schrauben (7) aufweisen, welche die Reibringe gegen jeweilige Flanschwände anpressen, **dadurch gekennzeichnet, dass** der elastische kreisförmige Bereich die Form mindestens einer Schlaufe (5) hat, die als eine Kompressionsfeder wirkt, die zwischen der Nabe und den Verbindungsmitteln (6) eingesetzt ist, wobei letztere gegenüberliegende Schultern (6a) aufweisen, die in entsprechenden Ausnehmungen (9a) in den inneren Ring-seiten aufgenommen werden.

## Revendications

1. Moyeu (3) pour frein à disque dans lequel l'essieu (1) d'un bogie de véhicule peut être enfoncé de force dans le coeur de moyeu (3a) qui s'étend radialement sous la forme d'une collerette circulaire (4) comprenant une partie circulaire élastique (5) et maintenant deux anneaux de friction opposés (2) par des moyens de connexion (6) comprenant des boulons traversants (7) qui pressent les anneaux de friction sur les parois de collerette respectives,
**caractérisé en ce que**
la partie circulaire élastique se présente sous la forme d'au moins une boucle (5) fonctionnant en ressort de compression interposé entre le moyeu et les moyens de connexion (6), ces derniers comprenant des épaulements opposés (6a) reçus dans des évidements respectifs (9a) des côtés d'anneaux intérieurs.
